# EUROPEAN PATENT APPLICATION

(11) **EP 0 704 784 A1**
(43) Date of publication of application: **03.04.1996**
(21) Application number: 94830466.2
(22) Date of filing: 30.09.1994
(51) Int. Cl.: G05D 16/20, F04B 49/20, F04B 49/06, F15B 1/00

(54) **A method and a system for producing and supplying compressed air**

(71) Applicant: F.I.A.C. S.r.l., I-40044 Pontecchio Marconi (Bologna) (IT)
(72) Inventor: Lucchi, Romano, I-40044 Pontecchio Marconi (Bologna) (IT)
(74) Representative: Lanzoni, Luciano

(57) **Abstract**

In a system (1) for producing compressed air, of the type comprising an electric motor (26) driving a rotary compressor (4), air is supplied directly by the compressor (4) to one or more services or tools (28) without using any intermediate storage device such as a receiver; the demand for greater or lesser quantities of air is met by varying the speed of rotation of the electric motor (26), hence of the compressor (4), in response to a difference between the supply pressure (Pr) registering at the outlet of the compressor (4) and a preset operating pressure (Pu). The difference in the two pressures is monitored continuously, and as a result of the variable speed characteristic remains constantly at a negligible level.

## Description

The present invention relates to a method for the production and supply of compressed air.

The art field of systems as used for producing and supplying compressed air, of the type comprising a prime mover or motor driving a compression unit, or compressor, embraces substantially two different types of compressor, namely reciprocating (pistons) and rotary or cycloidal (screw).

Whatever the type, the system is characterized by the presence not only of the motor and compressor but also of a receiver, that is, a vessel filled with compressed air produced by the reciprocating or rotary machine, of which the capacity will be selected to match the requirements of the various pneumatic services. It is to the receiver that the services in question, generally tools and sundry devices, are connected.

With regard specifically to rotary compressors, these are driven typically by electric motors for reasons both of engineering and of economy: given its notable flexibility and low noise level, for example, the electric motor is especially suitable for operation even in the room or area immediately occupied by persons using the compressor.

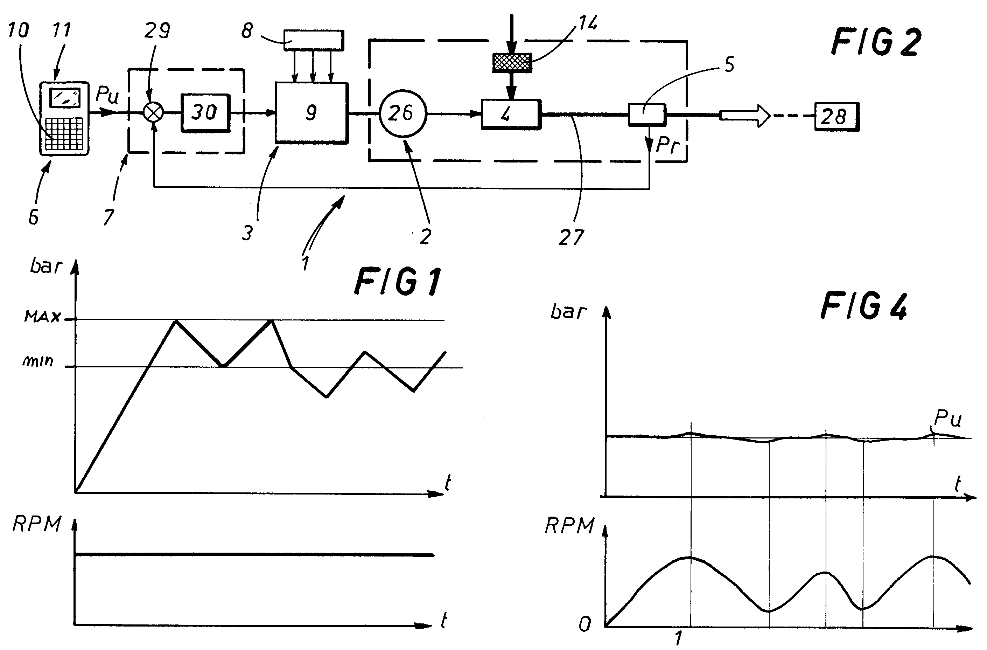

The operating principle of such systems is one of compressing air and directing it into the receiver until pressure internally of the receiver rises to a predetermined maximum value that is dependent on the operating pressure, i.e. the selected maximum pressure at which compressed air is to be delivered by the system; the value in question is denoted MAX in fig 1 of the accompanying drawings (top graph, indicating pressure-vs-time).

Whenever any service connected to the receiver is activated, air will be drawn from the supply and the pressure hitherto established internally of the vessel proceeds to fall gradually, according to the quantity of air released (see top graph of fig 1).

The moment that pressure internally of the receiver drops below a given minimum level, denoted "min" in fig 1, the electric motor is started and run at a steady speed of rotation (see bottom graph in fig 1 indicating rpm-vs-time) such that the compressor can compress more air and replenish the receiver, thereby restoring the maximum operating pressure.

As the pressure level internally of the receiver rises to the prescribed maximum value, the motor is shut off, or alternatively, the motor will continue to run albeit with the compressor itself prevented from producing more air. These two different modes of operating a system of the type in question are identifiable generally as "on/off" and "continuous running", the selection of one or the other being mode according to the conditions of use. The bottom graph of fig 1 indicates a continuous running type of operation.

These conventional air compressor systems betray numerous drawbacks, the most evident of which is an undesirable and excessive level of electrical power consumption, whether operating in the on/off or in the continuous running mode. More particularly, if a system is designed to switch off and then switch on every time the services call for more air, it will be clear that the electric motor must draw a notably high peak current at each restart, due to the slip which occurs between the windings, so that the user is forced to install power distribution equipment rated higher than effectively needed.

In addition, the capacity of the receiver (i.e. the volume of the vessel) is determined directly by the rated power of the compressor, hence of the motor, so that vessels must obviously be proportioned to suit a range of different powers. For example, an air compressor rated 10 HP will require a receiver of 500 litres capacity, a 20 HP compressor requires a receiver of 800 litres, a 50 HP compressor needs 2000 litres, and so forth. In short, the higher the rated power of the compressor, the greater must be the capacity of the receiver, with increased power necessarily dictating a larger receiver. Being a pressure vessel, moreover, the receiver itself must respond to legal requirements which generally will lay down stringent standards, varying from country to country; also, pressure vessels have to undergo thorough inspections and tests in the interests of safety. With all these factors, it may be necessary to plan for numerous constructional variations from a standard product, given the different operating pressures required in each country.

A further drawback derives from the unavoidable need to use different electric motors, according to the voltages and frequencies at which systems are required to operate. Indeed it is well known that national grid voltage and frequency can vary from country to country, so that adaptations have to be made in single instances for components to operate correctly off the power supply in the country of sale and installation.

Yet another drawback stems from the fact that the pressure of air delivered by the system not only continues to drop in the face of prolonged demand, but can fall below the minimum thresholds required for correct operation of the particular tools or equipment connected to the system.

The object of the present invention is to provide a method of producing compressed air such as will be capable of overcoming the drawbacks mentioned above in a simple and relatively economic manner, also to allow the realization of a system by which such a method may be implemented without using a receiver and independently of voltage and frequency values generated in the power supply to an electric motor, thereby ensuring a more uniform output.

The stated object is realized in a method and a system for producing and supplying compressed air according to the present invention and as described in detail, by way of example, with the aid of the accompanying drawings, in which:
- fig 1 shows a set of two graphs indicating outlet pressure and speed of rotation, respectively, in a conventional system for producing and supplying compressed air;
- fig 2 affords a block diagram of the system for producing and supplying compressed air according to the present invention, illustrating the electrical connections in particular;
- fig 3 is a schematic diagram of the compressor forming part of a system as in fig 2, illustrating the hydraulic and pneumatic systems in particular;
- fig 4 shows a set of two graphs indicating outlet pressure and speed of rotation, respectively, in a system for producing and supplying compressed air according to the present invention.

Referring to fig 2, the system for producing and supplying compressed air according to the present invention, denoted 1 in its entirety, comprises an electric drive unit 2 and a rotary type compression unit 4 set in motion by the drive unit.

The type of compression unit 4 in question delivers compressed air at a rate of flow which is dependent on the speed of rotation of the unit 4 itself and of the electric drive unit 2. In short, the higher the speed of rotation of the drive unit 2, hence of the compression unit 4, the greater correspondingly will be the flow of compressed air delivered.

It is a feature of the method according to the present invention that the compressed air produced by the compression unit 4 is supplied directly to the user devices or services, denoted 28 in fig 2 and referred to herein simply as tools, without the interposition or use of a receiver.

The pressure at which air is used by the tools 28, that is to say the supply pressure, is maintained substantially at a constant value by varying the speed of rotation of the drive unit 2, hence of the compression unit 4.

To this end, the method according to the present invention comprises at least three distinct steps, of which a first, effected continuously, consists in monitoring the pressure value of the compressed air required to operate the tools 28 and delivered to the point of use directly by the compression unit 4, i.e. the pressure denoted Pr at the outlet of the unit 4. A further step, likewise continuous, consists in comparing this same pressure Pr with a preset nominal or operating pressure Pu. The third step is one of applying a stepless variation to the speed of rotation of the drive unit 2, hence of the compression unit 4, in response to any variation in the monitored outlet pressure Pr. The variation in rotational speed is effected in such a manner that the monitored outlet pressure Pr will be maintained substantially constant and matched to the preset operating pressure Pu.
According to the method disclosed, the drive unit 2 receives its power input from an electronic power supply and control unit 3, of which the operation in turn is piloted by an intelligent electronic monitoring and control unit 7. On the input side, this same unit 7 is connected into a feedback loop with a measuring unit 5, capable of transducing the value of the pressure Pr registering at the output of the compression unit 4, and governed by way of an external control unit 6 affording a facility for presetting the operating pressure value Pu.

A system 1 capable of implementing the method according to the invention is shown schematically in the block diagram of fig 2: this illustrates the electric drive unit 2 connected to the electronic power supply and control unit 3, which also governs the speed of rotation. Compressed air is produced and delivered by the compression unit 4 at a given supply pressure Pr, of which the value is sensed by means of a measuring unit 5 installed at the outlet of the unit 4, as already intimated. The output of the measuring unit 5 is connected to one input of the intelligent electronic monitoring and control unit 7, of which a second input is connected to the output of the external control unit 6, this being the instrument used by the operator of the system to preset a desired nominal or maximum operating pressure Pu.

More in detail, the electric drive unit 2 consists in a variable frequency asynchronous three-phase motor 26, whilst the electronic unit 3 supplying power to and controlling the motor 26 will consist in an inverter 9, the adoption of which allows the motor 26 to be operated from any given electrical power source 8. In effect, by using an inverter 9 able to generate an output voltage (or current) of infinitely variable frequency, it becomes possible to govern the speed of the asynchronous motor: that is to say, the mechanical operating characteristic of the motor can be modified by varying the angular velocity of synchronism and thus allowing operation over a wide range of speeds. Using an asynchronous motor in conjunction with an inverter, starts can be effected without drawing high levels of current.

Indeed in a typical start using a power source of set frequency, the slip speed varies between 1 (at standstill) and a minimal value corresponding to a speed approaching that of synchronism; accordingly, since higher slip results in a higher absorption of current, it is an advantage of the inverter 9 that slip can be kept within acceptable limits for the entire duration of the start sequence, by way of a suitable frequency control on the input line to the motor 26, and the flow of current thus prevented from rising to excessive levels.

Once set in rotation by the electric motor 26, the compression unit 4 proceeds to compress air which is mingled with an oil, the oil subsequently being separated before the compressed air is supplied to the tools 28.

The measuring unit 5 is installed, downstream of the compression unit 4, on the pressure pipeline 27 between the compression unit 4 and the tools 28.

The output of the measuring unit 5 is connected to the input of a comparator 29 forming part of the monitoring and control unit 7, which also comprises a processing unit 30. More exactly, the measuring unit 5 is connected in a feedback loop to one input of the comparator 29, whilst the remaining input of the comparator is connected to the output of the external control unit 6. On the output side, the comparator 29 is connected to the input of the processing unit 30 which, according to the signal received, generates and transmits a corresponding output signal to the input stage of the inverter 9.

In practice, the processing unit 30 generates and transmits a signal to the inverter 9 by which the inverter is instructed at what speed or speeds of rotation the electric motor 26 and the compression unit 4 must run in order to cancel out the signal received from the comparator 29, or effectively, to ensure that the pressure value Pr sensed by way of the measuring unit 5 coincides with the pressure value Pu preset internally of the external control unit 6. The control unit 6 itself consists in an input device or keyboard 10 such as can be used to determine the desired maximum operating pressure value Pu, and a suitable data display unit 11.

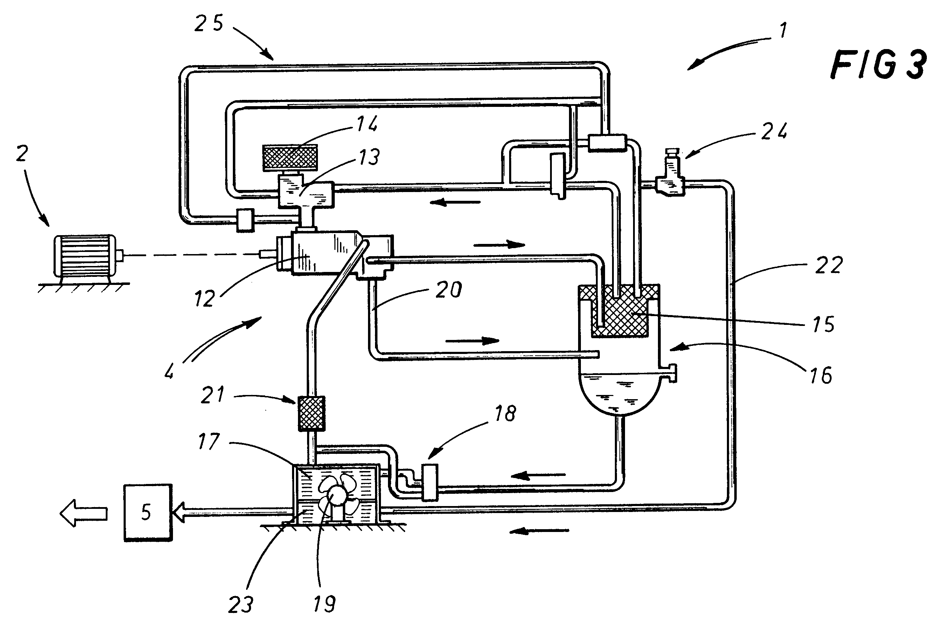

Before discussing the operation of the system 1 according to the present invention, the compression unit 4 will be described briefly with reference to fig 3. The unit 4 comprises a screw compressor 12 of which the air intake is fitted with a relative inlet valve 13 and air cleaner 14. The air is mixed with the oil prior to compression, and to this end the inlet also connects with a filter 21 by way of which the oil is received. The compressor outlet connects with an oil separating filter 15 located internally of a separator reservoir 16, which is connected in turn by way of a thermostat-controlled valve 18 with a heat exchanger, for example an oil radiator 17 cooled by a fan 19. The outlet of the screw compressor 12 is also connected directly to the reservoir 16 by way of a relative pipeline 20.

The oil emerging from the thermostat-controlled valve 18 passes into the filter 21, either directly or by way of the oil radiator 17, and thence back to the compressor 12. The oil separating filter 15 is connected on the outlet side to a pipeline 22 leading to a further heat exchanger 23, cooled by the aforementioned fan 19. Also installed on this further pipeline 22 is a minimum pressure valve 24.

The uppermost part of the separating filter 15 is connected to the inlet of the screw compressor 12 by way of a conventional unloading circuit 25.

When the system 1 is not in use, the drive unit 2 remains at standstill and there will be no supply of air from the compression unit 4 to the tools 28, as verifiable by way of the measuring unit 5 (see value zero in the bottom graph of fig 4, indicating speed-vs-time).

As discernible in the top graph of fig 4 (showing pressure-vs-time) which indicates the variation in pressure sensed by the measuring unit 5, the value remains other than zero since, even allowing for leaks, pressure continues to be held at the level existing in the circuit when the system 1 was last switched off. The moment that a tool connected to the outlet of the compression unit 4 calls for air, the slight reduction in pressure will be detected by the measuring unit 5 and a signal relayed to the monitoring and control unit 7; in response, the motor 26 is set in rotation and accelerated until such time as the measuring unit 5 senses a pressure corresponding to the value Pu preset by way of the external control unit 6 (see both graphs of fig 4, and the interval between t0 and t1). At t=1, the speed of rotation of the motor 26 will be adjusted gradually according to the rising or falling demand for air on the part of the tools 28 connected to the outlet of the compression unit 4. In practice, the monitoring and control unit 7 will continue to compare the value of the pressure sensed by way of the measuring unit 5 with the value indicated by the external control unit 6 and respond accordingly by adjusting the speed of rotation of the motor 26, increasing or lowering the rpm as the one value Pr respectively falls below or rises above the other value Pu. Observing the top graph of fig 4, it will be seen that the pressure sensed by the measuring unit 5 remains practically constant for the entire period indicated, whilst the speed of rotation of the motor 26, shown by the bottom graph of fig 4, varies steplessly between given minimum and maximum values according to the demand. If it be wished for any reason to supply compressed air at a pressure higher or lower than the current preset value, the necessary adjustment is made directly by way of the input device 10. This then relays the corresponding signal to the monitoring and control unit 7, which in turn makes the appropriate adjustment to the rpm of the motor 26. The structure of the system 1 is particularly advantageous since, besides allowing a considerable saving in cost by virtue of the fact that the electric motor 26 runs only at the speed necessary to generate a given pressure, it allows compressed air to be supplied substantially at a predetermined pressure irrespective of the demand.

To reiterate, particular advantage is derived from the use of an inverter 9, by which the operation of the electric motor 26 can be rendered independent of the mains power supply voltage (or current) and the relative frequency. A comparison drawn between the graphs of fig 1, which relate to a system of conventional embodiment, and the graphs of fig 4 relating to the system according to the invention, will suffice in itself to demonstrate the economic advantages of the system 1 disclosed in terms of electrical energy consumption. Another advantage of the present invention is that the entire system 1 can be interlocked to a remote control, since the drive unit 2 is piloted directly by the electronic monitoring and control unit 7. No less important are the advantages gained on the mechanical front, thanks to the elimination of the receiver and the simplification of existing mechanical components.

When applied to a range of production compressors, the various advantages in question combine to bring about a notable rationalization reflected in a much more flexible system, a genuine reduction of parts inventories and substantially simpler assembly line procedures.

## Claims

1. A method of producing and supplying compressed air, in systems (1) of the type comprising an electric drive unit (2) and a rotary compression unit (4), characterized
in that compressed air produced by the compression unit (4) is supplied direct to at least one service or tool (28), and in that the method comprises at least the steps of continuously monitoring the supply pressure (Pr) of the air registering at the outlet of the compression unit (4) and demanded by the service or tool (28), continuously comparing the supply pressure (Pr) with a preset operating pressure value (Pu), and steplessly varying the speed of rotation of the electric drive unit (2), hence of the compression unit (4), in response to variations in the monitored supply pressure (Pr) and in such a way as to maintain the selfsame supply pressure (Pr) substantially constant and equal to the preset operating pressure value (Pu) while the system (1) is in operation.

2. A method as in claim 1, wherein the compressed air is supplied from the compression unit (4) to the service or tool (28) by way of a direct pneumatic connection.

3. A method as in claim 1, wherein the electric drive unit (2) is set in rotation and governed by means of an electronic power supply and control unit (3) piloted by an intelligent electronic monitoring and control unit (7) which in turn is connected into a feedback loop with a measuring unit (5), capable of gauging and transducing the supply pressure (Pr) registering at the outlet of the compression unit (4), and controlled by the application of a preset operating pressure value (Pu) programmed into an external control unit (6).

4. A system (1) for implementation of the method of claim 1, comprising an electric drive unit (2), a rotary compression unit (4) set in motion by the drive unit (2) and capable of supplying compressed air directly to a pneumatic service or tool (28) at a pressure dependent on its own speed of rotation and that of the drive unit (2), an electronic power supply and control unit (3) by which the electric drive unit (2) is set in rotation and governed, a measuring unit (5) capable of sensing the pressure (Pr) of the compressed air delivered at the outlet of the compression unit (4) and demanded by the service or tool (28), an intelligent electronic monitoring and control unit (7) serving to pilot the electronic power supply and control unit (3), and an external control unit (6) such as can be utilized to preset a maximum operating pressure value (Pu) at which to supply the compressed air; wherein the intelligent electronic monitoring and control unit (7) comprises a comparator (29) of which the inputs are connected respectively to the measuring unit (5) and to the external control unit (6), and a processing unit (30) of which the input is connected to the output of the comparator (29) and the output to the electronic power supply and control unit (3), in such a way that the processing unit (30) is able to receive a signal from the comparator (29) corresponding to the difference between the operating pressure value (Pu) preset by way of the external control unit (6) and the level of the supply pressure (Pr) sensed by the measuring unit (5), and to respond by relaying a signal to the electronic power supply and control unit (3) of which the value corresponds to a speed of rotation of the electric drive unit (2) dependent on the signal received from the comparator (29).

5. A system as in claim 4, wherein the electric drive unit (2) is a variable frequency asynchronous three phase electric motor (2).

6. A system as in claim 4, wherein the electronic power supply and control unit (3) is a d.c. to a.c. inverter (9).
